# EUROPÄISCHE PATENTSCHRIFT

(11) **EP 2 015 341 B1**
(45) Veröffentlichungstag und Bekanntmachung des Hinweises auf die Patenterteilung: **20.01.2010**
(21) Anmeldenummer: 07013517.3
(22) Anmeldetag: 10.07.2007
(51) Int. Cl.: H01H 89/06

(54) **Gruppenabsicherungsmodul für eine Schaltgeräteanordnung sowie Schaltgeräteanordnung mit einem derartigen Gruppenabsicherungsmodul**
Group insulation module for a switching gear assembly and switching gear assembly with such a group insulation module
Module de protection de groupes pour une installation de commutateurs tout comme installation de commutateurs dotée d'un tel module de protection de groupes

(43) Veröffentlichungstag der Anmeldung: 14.01.2009
(73) Patentinhaber: SIEMENS AKTIENGESELLSCHAFT, 80333 München (DE)
(72) Erfinder: Maigret, Guillaume, 33600 Pessac (FR); Moosburger, Martin, 91227 Leinburg (DE); Rößler, Andreas, 90482 Nürnberg (DE)

(56) Entgegenhaltungen:
- DE-A1- 10 102 316
- DE-A1- 10 148 155
- ZIPPERER H: "MEHR SICHERHEIT FUER MENSCH UND MASCHINE - SAFETY INTEGRATED" ELEKTROTECHNISCHE ZEITSCHRIFT - ETZ, VDE VERLAG GMBH, BERLIN, DE, Bd. 120, Nr. 17, September 1999 (1999-09), Seiten 34-35,37, XP000924177 ISSN: 0948-7387

## Beschreibung

Die Erfindung betrifft ein Gruppenabsicherungsmodul für eine Schaltgeräteanordnung zur Absicherung einer Gruppe von Verbraucherabzweigen, insbesondere von Motorstartern, mit jeweils einem Schütz zum Ein- oder Ausschalten eines jeweiligen Verbrauchers, wobei das Gruppenabsicherungsmodul einen Leistungsschalter zur Verwirklichung eines Kurzschlussschutzes aufweist. Der Leistungsschalter ist mit einem netzseitigen Eingang und mit einem verbraucherseitigen Ausgang des Gruppenabsicherungsmoduls zum Anschließen an ein Stromversorgungsnetz und zum Anschließen der Gruppe von Verbraucherabzweigen verbunden. Das Gruppenabsicherungsmodul weist eine Sicherheitsauswerteeinheit auf, über welche der Leistungsschalter auslösbar ist, falls eine von den jeweiligen Verbraucherabzweigen erfassbare Rückmeldung angibt, dass einer der Schütze der Verbraucherabzweige nicht mehr abschaltbar ist.

Weiterhin betrifft die Erfindung eine Schaltgeräteanordnung mit einer Gruppe von Verbraucherabzweigen, insbesondere von Motorstartern, mit jeweils zumindest einem Schütz zum Ein- oder Ausschalten eines jeweiligen Verbrauchers. Die Schaltgeräteanordnung weist einen vorgeschalteten Leistungsschalter zur Verwirklichung eines Kurzschlussschutzes auf, wobei der Leistungsschalter einen netzseitigen Eingang zum Anschließen an ein Stromversorgungsnetz und einen verbraucherseitigen Ausgang zum Anschließen der Verbraucherabzweige aufweist. Die Schaltgeräteanordnung verfügt über eine Sicherheitsauswertefunktion, durch welche der Leistungsschalter auslösbar ist, falls eine von den jeweiligen Verbraucherabzweigen erfassbare Rückmeldung angibt, dass einer der Schütze der Verbraucherabzweige nicht mehr abschaltbar ist.

Aus der deutschen Offenlegungsschrift DE 101 48 155 A1 ist eine Anordnung zur Überwachung von an eine Stromzuleitung angeschlossenen und über einen Steuerbus mit einer Steuereinrichtung kommunizierenden Motorstartern bekannt. Jeder Motorstarter weist eine Messeinrichtung zur Messung des durch den Motorstarter geleiteten Stroms auf. In der Stromzuleitung ist ein Schutzschalter vorgesehen und dem Schutzschalter eine Auslöseeinrichtung zugeordnet, die von der Steuereinrichtung über den Steuerbus in Abhängigkeit vom gemessenen Strom ansteuerbar ist.

Aus der deutschen Offenlegungsschrift DE 101 02 316 A1 ist eine Motorstarteranordnung bekannt, umfassend ein erstes elektrisches Schaltgerät, insbesondere Leistungsschalter, mit einer elektronischen Auslöseeinheit und ein zweites elektrisches Schaltgerät, insbesondere Schütz. Die Schaltgeräte sind in Serie geschaltet zur Verbindung beziehungsweise Trennung einer mindestens 1-phasigen Last mit beziehungsweise von einer Stromquelle. Es sind Mittel zur bidirektionalen Kommunikation zwischen erstem und zweitem Schaltgerät vorhanden, wobei das erste Schaltgerät und die Mittel zur Kommunikation derart ausgebildet sind, dass ein Auslösevorgang des ersten Schaltgerätes bei Auftreten einer Überlast zeitlich verzögert wird, innerhalb dieser Zeit das zweite Schaltgerät durch die Mittel zur Kommunikation zur Trennung veranlasst wird und im Fall der Nichttrennung durch das zweite Schaltgerät die Auslösung durch das erste Schaltgerät erfolgt.

Derartige Schaltanordnungen sind allgemein bekannt.

Im Rahmen der Sicherheitstechnik werden oftmals sicherheitsrelevante Schaltzustände von Baugruppen mittels Schalter, wie z.B. Hilfskontaktschalter, erfasst und überwacht. In bestimmten Fällen ist es zulässig, die Schalter der Baugruppen elektrisch in einer Reihe zu einer Rückmeldeschleife zu schalten. Öffnet dann ein Schalter der jeweiligen Baugruppen, so kann übergeordnet die elektrische Versorgung zentral abgeschaltet werden.

Aus dem Stand der Technik ist es bekannt, die Schalter, insbesondere die an Schützen zum betrieblichen Schalten der Verbraucher angebrachten Hilfskontaktschalter, manuell zu verdrahten. Diese Vorgehensweise ist zeitaufwändig und fehlerträchtig. Bekannt ist in diesem Zusammenhang auch, dass die Rückmeldeschleife durch das Zusammenstecken von Baugruppen mittels aufeinander abgestimmter Steckverbindungen automatisch verlängert werden kann. In diesem Fall müssen die "offenen" Kontakte der letzten Baugruppe noch elektrisch leitend miteinander verbunden werden.

Es ist eine Aufgabe der Erfindung, ein Gruppenabsicherungsmodul für eine Schaltgeräteanordnung mit einer Gruppe von Verbraucherabzweigen anzugeben, welches eine vereinfachte Überwachungsmöglichkeit für die Verbraucherabzweige bietet.

Es ist eine weitere Aufgabe der Erfindung, eine Schaltgeräteanordnung mit einem derartigen Gruppenabsicherungsmodul anzugeben.

Die Aufgabe der Erfindung wird mit einem Gruppenabsicherungsmodul mit den Merkmalen des Anspruchs 1 gelöst. Vorteilhafte Ausgestaltungen des Gruppenabsicherungsmoduls sind in den abhängigen Ansprüchen 2 bis 4 genannt. Im Anspruch 5 ist eine Schaltgeräteanordnung mit einem derartigen Gruppenabsicherungsmodul mit einer Gruppe von Verbraucherabzweigen angegeben. In den abhängigen Ansprüchen 6 bis 11 sind vorteilhafte Ausgestaltungen der Schaltgeräteanordnung genannt.

Erfindungsgemäß ist das Gruppenabsicherungsmodul als Baueinheit ausgebildet. Es weist einen ersten und zweiten mit der Sicherheitsauswerteeinheit verbundenen Schleifenkontakt auf. Die beiden Schleifenkontakte sind Bestandteile einer vorkonfektionierten ersten Steckverbindung. Die erste Steckverbindung ist von außerhalb des Gehäuses zugänglich und derart ausgebildet, dass eine zweite Steckverbindung eines Verbraucherabzweiges mit der ersten Steckverbindung des Gruppenabsicherungsmoduls zum Aufbau einer automatischen Rückmeldeschleife zusammensteckbar ist. Die Sicherheitsauswerteeinheit löst aus, wenn die Rückmeldeschleife unterbrochen ist.

Der besondere Vorteil ist, dass durch einfaches Anstecken eines Verbraucherabzweiges an das Gruppenabsicherungsmodul eine Überwachung des zumindest einen Schützes des angesteckten Verbraucherabzweiges ohne jeglichen Montageaufwand möglich ist. Werden weitere Verbraucherabzweige aneinandergereiht, so erstreckt sich die Überwachungsmöglichkeit automatisch auch auf diese weiteren Verbraucherabzweige.

Die Sicherheitsauswerteeinheit weist im Wesentlichen die Funktion eines modularen Sicherheitsschaltgerätes der Fa. Siemens auf. Derartige Sicherheitsschaltgeräte sind bei der Fa. Siemens unter der Bestellnummer 3TK28-xx-yyyyy erhältlich. Mit "xx" und "yyyyy" sind Ziffer- und Buchstabenkombinationen bezeichnet, die verschiedenste Ausführungsformen des Sicherheitsschaltgerätes kennzeichnen. Die Sicherheitsauswerteeinheit ist vorzugsweise redundant aufgebaut. Die Abfrage der anschließbaren Notaus-Taster oder sonstiger Schalter erfolgt vorzugsweise zweikanalig. Weiterhin weist die Sicherheitsauswerteeinheit einen "sicheren" Ausgang zum Ansteuern einer Auslöseeinheit auf. Die Auslöseeinheit ist beispielsweise ein Hubmagnet, der bei Stromerregung bzw. bei fehlender Stromerregung auf ein Schaltschloss des im Gruppenabsicherungsmodul integrierten Leistungsschalters einwirkt. Typischerweise weist die Sicherheitsauswerteeinheit mindestens einen Mikrocontroller, der den Anforderungen an die Sicherheitstechnik entsprechend ausgebildet ist. Der mindestens eine Mikrocontroller ist weiterhin mit einer Busanschalteinheit zum datentechnischen Austausch mit dem internen Bussystem verbunden, über den auch die Module an der Hutschiene angeschlossen sind. Die Busanschalteinheit kann bereits im mindestens einen Mikrocontroller integriert sein. Wird der Sicherheitsauswerteeinheit über das interne Bussystem gemeldet, dass trotz eines Öffnenbefehls an einen Verbraucherabzweig der betreffende Schütz geschlossen bleibt, so öffnet die Sicherheitsauswerteeinheit einen Schalter im Gruppenabsicherungsmodul, um zentral die Versorgungsspannung für alle Schütze der Verbraucherabzweige abzuschalten. Die Versorgungsspannung, wie z.B. eine 24V-Gleichspannung, wird dem Gruppenabsicherungsmodul vorzugsweise von einem gleichfalls an der Hutschiene angebrachten Stromversorgungsmodul zugeführt. Zur Ermittlung, dass ein Schütz nicht mehr öffnet, können die Verbraucherabzweige jeweils eine Stromüberwachung aufweisen. Schließlich kann die Sicherheitsauswerteeinheit im Falle eines über das interne Bussystem gemeldeten und sich nicht mehr öffnenden Schützes den Leistungsschalter zum Auslösen ansteuern.

Nach einer Ausführungsform weist das Gruppenabsicherungsmodul ein quaderförmiges, zur aneinanderreihbaren Montage an einer Hutschiene ausgebildetes Gehäuse auf. Dadurch vereinfacht sich die Montage nochmals. Dadurch kann das erfindungsgemäße Gruppenabsicherungsmodul automatisch mit einem typischerweise gleichfalls an der Hutschiene montierten Stromversorgungsmodul zur Stromversorgung sowie mit einer Steuerbaugruppe zur Datenkommunikation untereinander verbunden werden.

Im Besonderen sind die erste und zweite Steckverbindung derart angeordnet, dass die zweite Steckverbindung des Verbraucherabzweiges und die erste Steckverbindung des Gruppenabsicherungsmoduls beim Ansetzen des Verbraucherabzweiges an das Gruppenabsicherungsmodul automatisch zusammengesteckt werden. Dadurch vereinfacht sich die Montage vorteilhaft nochmals.

Nach einer Ausführungsform überprüft die Sicherheitsauswerteeinheit die Rückmeldeschleife nur nach einer Not- oder Sicherheitsabschaltung auf eine Unterbrechung hin. Insbesondere ist nach derartigen Abschaltungen mit verschweißten Schützkontakten zu rechnen. In diesem Fall wird bei einem Wiedereinschaltversuch überprüft, ob alle Schalter in der Rückmeldeschleife noch geschlossen sind. Die Schalter sind vorzugsweise Hilfskontaktschalter, die mit den Hauptkontakten des jeweiligen Schützes zwangsgeführt sind. Ist zumindest einer der Schützhauptkontakte verschweißt, so ist der entsprechende Hilfskontaktschalter geöffnet.

Die Aufgabe der Erfindung wird weiterhin mit einer Schaltgeräteanordnung gelöst, welche ein erfindungsgemäßes Gruppenabsicherungsmodul aufweist.

Eine solche Schaltgeräteanordnung weist durch die Integration des Kurzschlussschutzes und der unabhängigen Abschaltmöglichkeit der Verbraucher in ein (einziges) Modul eine äußerst kompakte Bauform auf. Weiterhin kann vorteilhaft auf ein separates Einspeiseschütz verzichtet werden, welches üblicherweise als zweite unabhängige Schaltstelle zur Gruppenabschaltung der Verbraucherabzweige vorgesehen ist. Weiterhin kann vorteilhaft auf eine Verschaltungsbaugruppe verzichtet werden.

Typischweise ist die Gruppe von Verbraucherabzweigen quaderförmig zur modularen aneinanderreihbaren Montage an einer Hutschiene ausgebildet. Dadurch vereinfacht sich die Montage nochmals. Dadurch können die Verbraucherabzweige automatisch mit einem typischerweise gleichfalls an der Hutschiene montierten Stromversorgungsmodul zur Stromversorgung sowie mit einer Steuerbaugruppe zur Datenkommunikation verbunden werden.

Nach einer weiteren Ausführungsform weisen die Verbraucherabzweige jeweils ein Modulgehäuse, einen Schalter, einen Zuführkontakt, einen Rückführkontakt, einen ersten und zweiten Weiterleitungskontakt, eine Schalteinrichtung und ein erstes und zweites Betätigungselement auf. Die Schalter und die Schalteinrichtung sind im Modulgehäuse angeordnet. Der Zuführkontakt und der erste Weiterleitungskontakt sind über den Schalter und der Rückführkontakt und der zweite Weiterleitungskontakt direkt miteinander verbunden. Der Zuführkontakt, der Rückführkontakt und das erste Betätigungselement sind Bestandteile einer zweiten vorkonfektionierten Steckverbindung und die Weiterleitungskontakte und das zweite Betätigungselement Bestandteile einer dritten vorkonfektionierten Steckverbindung. Die Steckverbindungen sind von außerhalb des Modulgehäuses zugänglich und derart ausgebildet, dass die zweite Steckverbindung eines ersten modularen Verbraucherabzweiges mit der dritten Steckverbindung eines zweiten modularen Verbraucherabzweiges zusammensteckbar ist. Durch das Zusammenstecken der Steckverbindungen werden je einer der Weiterleitungskontakte des zweiten Verbraucherabzweiges mit dem Zuführkontakt und dem Rückführkontakt des ersten Verbraucherabzweiges verbunden. Das erste Betätigungselement des ersten Verbraucherabzweiges wirkt derart auf das zweite Betätigungselement des zweiten Verbraucherabzweiges ein, dass die Schalteinrichtung des zweiten Verbraucherabzweiges einen Strompfad vom ersten zum zweiten Weiterleitungskontakt des zweiten Verbraucherabzweiges unterbricht.

Der besondere Vorteil dabei ist, dass durch einfaches Anstecken eines Verbraucherabzweiges an einen weiteren Verbraucherabzweig eine automatische, selbstverlängernde und durch das erfindungsgemäße Gruppenabsicherungsmodul überwachbare Rückmeldeschleife möglich ist.

Nach einer weiteren Ausführungsform ist die Schalteinrichtung als mechanische Schalteinrichtung ausgebildet. Die Betätigungselemente sind als mechanische Betätigungselemente ausgebildet.

Alternativ kann die Schalteinrichtung als elektronische Schalteinrichtung ausgebildet sein. Die Betätigungselemente können als elektrisch zusammenwirkende Kontakte ausgebildet sein.

Im Besonderen sind die Steckverbindungen derart angeordnet, dass die zweite Steckverbindung des ersten Verbraucherabzweiges und die dritte Steckverbindung des zweiten Verbraucherabzweiges beim Ansetzen des ersten Verbraucherabzweiges an den zweiten Verbraucherabzweig automatisch zusammengesteckt werden. Dadurch vereinfacht sich der Montageaufwand nochmals.

Schließlich weist die Schaltgeräteanordnung eine Steuerbaugruppe auf, welche einen Anschluss zum Anschließen an ein übergeordnetes Bussystem aufweist und welche über ein internes Bussystem mit einer Steuereinheit des Gruppenabsicherungsmoduls und mit jeweils einer Steuereinheit der angeschlossenen Verbraucherabzweige datentechnisch verbunden ist.

Dadurch ist eine anwendungsbezogene individuelle Ansteuerung der Schütze in den jeweiligen Verbraucherabzweigen möglich. Die Ansteuerung kann über einen an das übergeordnete Bussystem angeschlossenen Prozessrechner erfolgen. Auf umgekehrtem Wege können Schaltzustände der jeweiligen Verbraucherabzweige abgefragt und an den Prozessrechner übertragen werden. Das übergeordnete Bussystem ist beispielsweise ein Profibus oder ein Feldbus. Das interne Bussystem ist beispielsweise ein Rückwandbus oder ein sich über die aneinandergereihten modularen Baugruppen, wie Stromversorgungsmodul, Gruppenabsicherungsmodul sowie den Verbraucherabzweigen, selbstverlängernder interner Bus.

Die Erfindung sowie vorteilhafte Ausführungen der Erfindung werden im Weiteren anhand der nachfolgenden Figuren näher beschrieben. Es zeigen
- FIG 1: eine Schaltgeräteanordnung nach dem Stand der Technik,
- FIG 2: eine weitere Schaltgeräteanordnung nach dem Stand der Technik,
- FIG 3: beispielhaft eine Schaltgeräteanordnung mit einem Gruppenabsicherungsmodul ,
- FIG 4: beispielhaft ein Gruppenabsicherungsmodul mit zwei hintereinandergereiht eingesteckten Verbraucherabzweigen gemäß der Erfindung,
- FIG 5: eine Ausführungsform von Steckverbindungen zur Verbindung des Gruppenabsicherungsmoduls mit beispielhaft nur einem Verbraucherabzweig und
- FIG 6: eine weitere Ausführungsform von Steckverbindungen zur Verbindung des Gruppenabsicherungsmoduls mit beispielhaft nur einem Verbraucherabzweig.

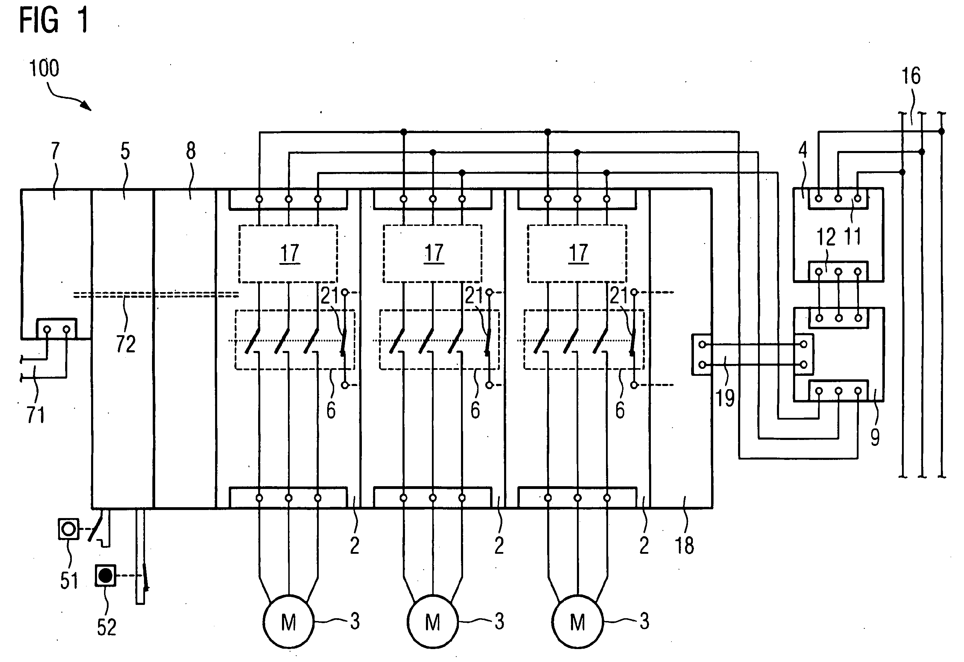

FIG 1 zeigt eine dreipolige Schaltgeräteanordnung 100 nach dem Stand der Technik. Bis auf die Baugruppen 4 und 9 sind alle gezeigten Baugruppen 2, 5, 7, 18 aneinandergereiht montiert, wie z.B. an einer Hutschiene. Im rechten Teil der FIG 1 ist ein Stromversorgungsnetz 16 zu sehen, an welches ein Leistungsschalter 4 zur Verwirklichung eines Kurzschlussschutzes geschaltet ist. Dem Leistungsschalter 4 ist ein Einspeiseschütz 9 nachgeschaltet, welches seinerseits einer Gruppe von Verbraucherabzweigen 2 vorgeschaltet ist. Im Beispiel der FIG 1 sind die drei Verbraucherabzweige 2 beispielhaft Motorstarter mit einem integrierten Überstromschutz 17. Die daran angeschlossenen Verbraucher 3 sind dreiphasige Elektromotoren. Der Einspeiseschütz 9 ist zudem über Verbindungsleitungen 19 mit einer Verschaltungsbaugruppe 18 verbunden. Letztere ist mit je einem Schalter 21 der Verbraucherabzweige 2 und mit einer Sicherheitsauswerteeinheit 5 derart verschaltet, dass der Einspeiseschütz 9 im Falle eines oder mehrerer geöffneter Schalter 21 ausgelöst werden kann. Aus Gründen der Übersichtlichkeit ist die Verdrahtung der Schalter 21 mit der Verschaltungsbaugruppe 18 selbst nicht dargestellt. Die Schalter 21 sind vorzugsweise in Reihe geschaltet und bilden somit eine Rückmeldeschleife.

Im linken Teil der FIG 1 ist eine Steuerbaugruppe 7 zu sehen. Sie dient zur Anschaltung an ein übergeordnetes Bussystem 71, wie z.B. an einen Profibus oder Feldbus. Die Steuerbaugruppe 7 ist weiterhin an ein internes Bussystem 72 angeschlossen, welches die Baugruppen 2, 5, 7, 8 datentechnisch miteinander verbindet. Die Steuerbaugruppe 7 setzt somit den Datenverkehr von dem übergeordneten Bussystems 71 in das interne Bussystem 72 und in umgekehrter Richtung um.

An der Sicherheitsauswerteeinheit 5 sind beispielhaft ein Einschalt-Taster 51 sowie ein Notaus-Taster 52 angeschlossen.

Die Sicherheitsauswerteeinheit 5 weist nicht weiter gezeigte Mittel zur sicheren Erfassung der beiden Taster 51, 52 auf. Sie prüft zudem, ob nach Drücken des Notaus-Tasters 52 oder nach Öffnen eines Sicherheitsschalters, wie z.B. einer überwachten Tür oder eines Lichtvorhanges, die Verbraucher 3 sicher abgeschaltet worden sind. Wird im Anschluss zum Wiedereinschalten der Schaltanordnung 100 der Einschalt-Taster 51 gedrückt, so prüft die Sicherheitsauswerteeinheit 5, ob noch alle Schalter 21 der Verbraucherabzweige 2 geschlossen sind. Im anderen Fall löst die Sicherheitsauswerteeinheit 5 das Einspeiseschütz 9 aus.

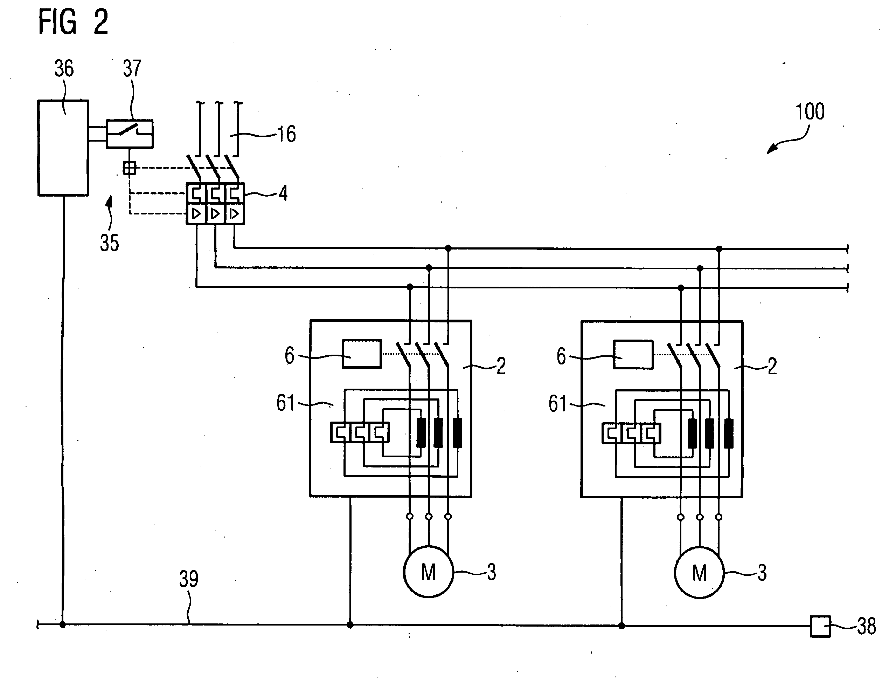

FIG 2 zeigt eine weitere Schaltgeräteanordnung nach dem Stand der Technik. Im linken oberen Teil der FIG 2 ist ein Leistungs- oder Schutzschalter 4 zu sehen, welcher im Kurzschlussfall die gezeigten Motorstarter 2 von einem Stromversorgungsnetz 16 trennt. Unabhängig davon kann der Leistungsschalter 4 mittels einer Auslöseeinrichtung 35 ausgelöst werden. Letztere weist einen busfähigen sicheren ASi-Slave 36 sowie einen Auslöser 37 auf, der auf ein Schaltschloss des Leistungsschalters 4 zum Öffnen einwirkt. Die beiden Motorstarter 2, der ASi-Slave 36 sowie eine Steuereinrichtung 38 bzw. Busmaster sind gemeinsam an einem ASi-Bus 39 angeschlossen.

Die beiden Motorstarter 2 weisen je einen Schütz 6 zum Trennen eines Elektromotors 3 vom Stromversorgungsnetz 16 auf. Weiterhin weisen die Motorstarter 2 je eine Strommesseinrichtung 61 auf. Stellt der jeweilige Motorstarter 2 einen Überstrom fest, so gibt dieser über den ASi-Bus 39 einen Ausschaltbefehl an die Auslöseeinrichtung 35 aus. In entsprechender Weise wird ein Ausschaltbefehl ausgegeben, wenn trotz "vermeintlich" abgeschaltetem Schütz 6 ein Stromfluss zum Verbraucher 3 gemessen werden sollte. Dies ist meisten dann der Fall, wenn sich die Hauptkontakte des Schützes 6 aufgrund einer Verschweißung nicht mehr öffnen lassen.

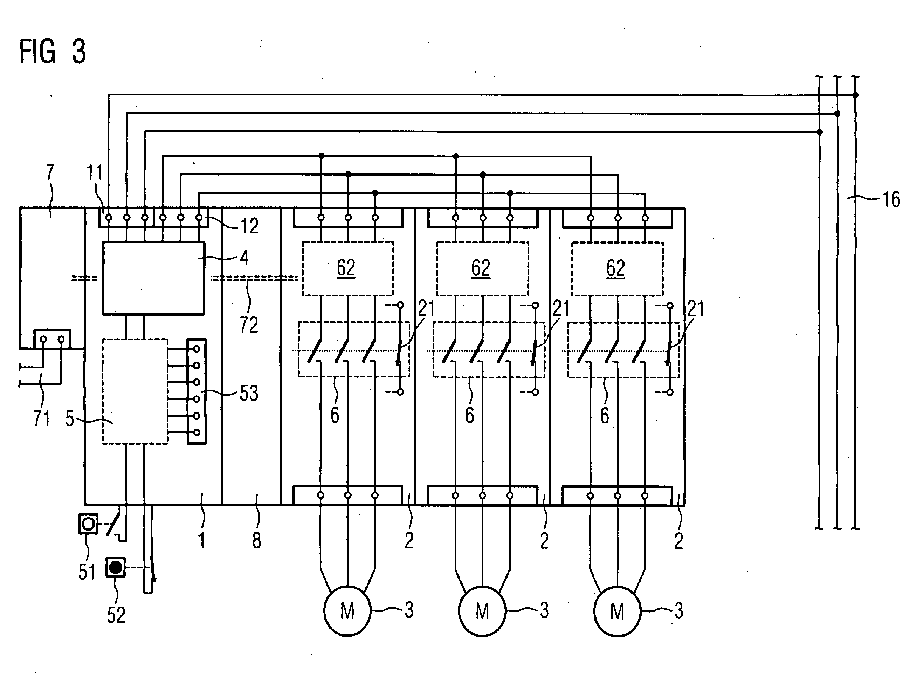

FIG 3 zeigt beispielhaft eine Schaltgeräteanordnung 100 mit einem Gruppenabsicherungsmodul 1. Die gezeigte Schaltgeräteanordnung 100 ist beispielhaft dreipolig ausgeführt. Sie kann alternativ einpolig, zweipolig oder mehr als dreipolig ausgeführt sein. Die vorliegende Schaltgeräteanordnung 100 ist ähnlich zum Aufbau der in FIG 1 gezeigten Schaltgeräteanordnung 100, jedoch fehlen der separate Leistungsschalter 4 sowie der Einspeiseschütz 9. Darüber hinaus fehlt die Verschaltungsbaugruppe 18. Die Verbraucherabzweige 2 sind wiederum beispielhaft Motorstarter, die Verbraucher 3 dreiphasige Elektromotoren.

Die Schaltgeräteanordnung 100 weist ein Gruppenabsicherungsmodul 1 zur Absicherung der Verbraucherabzweige 2 auf. Das Gruppenabsicherungsmodul 1 weist einen Leistungsschalter 4 zur Verwirklichung eines Kurzschlussschutzes auf. Der Leistungsschalter 4 ist mit einem netzseitigen Eingang 11 und mit einem verbraucherseitigen Ausgang 12 des als Baueinheit ausgebildeten Gruppenabsicherungsmoduls 1 zum Anschließen an ein Stromversorgungsnetz 16 und zum Anschließen der Gruppe von Verbraucherabzweigen 2 verbunden. Weiterhin weist das Gruppenabsicherungsmodul 1 eine Sicherheitsauswerteeinheit 5 auf, über welche der Leistungsschalter 4 auslösbar ist, falls eine von den jeweiligen Verbraucherabzweigen 2 erfassbare Rückmeldung angibt, dass einer der Schütze 6 der Verbraucherabzweige 2 nicht mehr abschaltbar ist.

Die Rückmeldung erfolgt dadurch, dass der Schaltzustand der jeweiligen Schalter 21 der Verbraucherabzweige 2 durch die Sicherheitsauswerteeinheit 5 erfasst und überwacht wird. Der jeweilige Schalter 21 ist insbesondere ein Hilfskontaktschalter, der durch die Hauptkontakte des jeweiligen Schützes 6 im Verbraucherabzweig 2 zwangsgeführt ist. Die jeweiligen Schalter 21 können beispielsweise mit einem an einer Gehäuseaußenseite angeordneten Anschlussfeld 53 des Gruppenabsicherungsmoduls 1 verdrahtet sein. Stellt die Sicherheitsauswerteeinheit 5 fest, dass zumindest einer der Schalter 21 geöffnet ist, wie z.B. durch Einprägen eines Prüfstroms oder durch Anlegen einer Prüfspannung, so kann ein entsprechendes Auslösesignal über die nicht weiter bezeichneten internen Verbindungsleitungen zwischen der Sicherheitsauswerteeinheit 5 und dem Leistungsschalter 4 ausgegeben werden.

Weiterhin weisen das gezeigte Gruppenabsicherungsmodul 1, wie auch die Verbraucherabzweige 2, das Stromversorgungsmodul 8 und die Steuerbaugruppe 7, je ein quaderförmiges, zur aneinanderreihbaren Montage an einer Hutschiene ausgebildetes Gehäuse 10 bzw. Modulgehäuse 20 auf.

Im Beispiel der FIG 3 weist die Steuerbaugruppe 7 weiterhin einen Anschluss zum Anschließen an ein übergeordnetes Bussystem 71 und an ein internes Bussystem 72 auf. Mit letzterem sind zumindest das Gruppenabsicherungsmodul 1 und die angeschlossenen Verbraucherabzweige 2 datentechnisch miteinander verbunden.

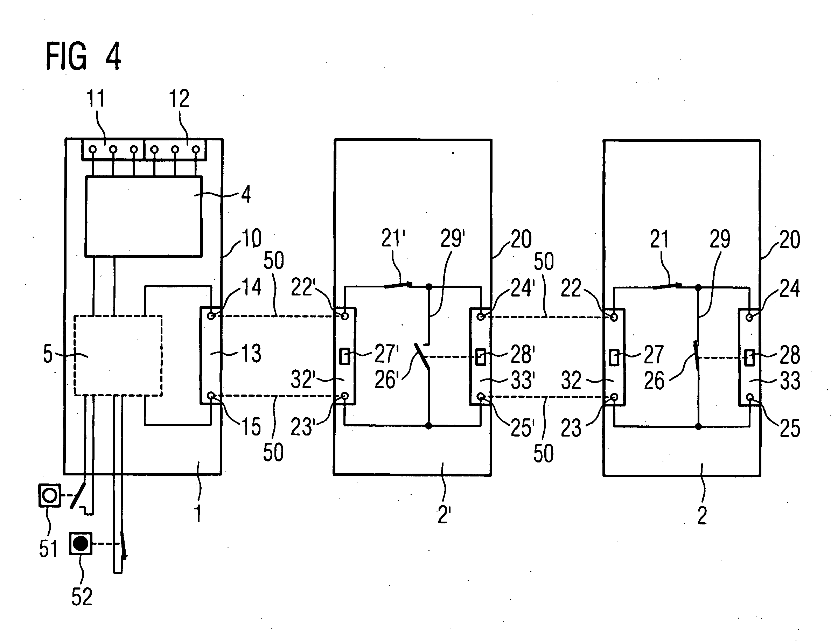

FIG 4 zeigt beispielhaft ein Gruppenabsicherungsmodul 1 mit zwei hintereinandergereiht eingesteckten Verbraucherabzweigen 2, 2' gemäß der Erfindung. Soweit es den Aufbau der einzelnen Baugruppen 2, 2' betrifft, wird nachfolgend nur der Aufbau der ersten Baugruppe 2 näher erläutert. Die zweite Baugruppe 2' ist - soweit es den Gegenstand der Erfindung betrifft - analog ausgebildet. Die Elemente der zweiten Baugruppe 2' sind daher mit den gleichen Bezugszeichen versehen wie die jeweils korrespondierenden Elemente der ersten Baugruppe 2, jedoch zusätzlich mit einem Apostroph.

Im linken Teil der FIG 4 ist ein Gruppenabsicherungsmodul 1 zu sehen, an welchem ein zweiter Verbraucherabzweig 2' eingesteckt ist. An dem zweiten Verbraucherabzweig 2' ist ein erster Verbraucherabzweig 2 eingesteckt. Die gezeigten Baugruppen 1, 2', 2 sind derart ausgebildet, dass durch das Aneinanderstecken eine automatisch selbstaufbauende Rückmeldeschleife 50 entsteht, welche dann durch das Gruppenabsicherungsmodul 1 erfasst und überprüft werden kann.

Hierzu weist das Gruppenabsicherungsmodul 1 erfindungsgemäß einen ersten und zweiten mit der Sicherheitsauswerteeinheit 5 verbundenen Schleifenkontakt 14, 15 auf. Beide Schleifenkontakte 14, 15 sind Bestandteile einer vorkonfektionierten ersten Steckverbindung 13. Die erste Steckverbindung 13 ist von außerhalb des Gehäuses 10 zugänglich und derart ausgebildet, dass eine zweite Steckverbindung 32 eines Verbraucherabzweiges 2' mit der ersten Steckverbindung 13 des Gruppenabsicherungsmoduls 1 zum Aufbau der Rückmeldeschleife 50 zusammensteckbar ist. Die Sicherheitsauswerteeinheit 5 löst aus, wenn die Rückmeldeschleife 50 unterbrochen ist. Insbesondere prüft die Sicherheitsauswerteeinheit 5 die Rückmeldeschleife 50 nur nach einer Not- oder Sicherheitsabschaltung auf eine Unterbrechung hin. Weiterhin sind die erste und zweite Steckverbindung 13, 32' derart angeordnet sind, dass die zweite Steckverbindung 32' des Verbraucherabzweiges 2' und die erste Steckverbindung 13 des Gruppenabsicherungsmoduls 1 beim Ansetzen des Verbraucherabzweiges 2' an das Gruppenabsicherungsmodul 1 automatisch zusammengesteckt werden.

Der erste Verbraucherabzweig 2 weist ein Modulgehäuse 20, einen Schalter 21, einen Zuführkontakt 22, einen Rückführkontakt 23, einen ersten und zweiten Weiterleitungskontakt 24, 25, eine Schalteinrichtung 26 und ein erstes und zweites Betätigungselement 27, 28 auf. Der Schalter 21 ist vorzugsweise ein Hilfskontaktschalter des jeweiligen Schützes 6 der Verbraucherabzweige 2. Der Schalter 21 und die Schalteinrichtung 26 sind im Modulgehäuse 20 angeordnet. Es sind der Zuführkontakt 22 und der erste Weiterleitungskontakt 24 über den Schalter 21 verbunden. Weiterhin sind der Rückführkontakt 23 und der zweite Weiterleitungskontakt 25 direkt miteinander verbunden. Der Zuführkontakt 22, der Rückführkontakt 23 und das erste Betätigungselement 27 sind Bestandteile einer zweiten vorkonfektionierten Steckverbindung 32 und die Weiterleitungskontakte 24, 25 und das zweite Betätigungselement 28 Bestandteile einer dritten vorkonfektionierten Steckverbindung 33. Die jeweils beiden Steckverbindungen 32, 33 sind von au-ßerhalb des Modulgehäuses 20 zugänglich und derart ausgebildet, dass die zweite Steckverbindung 32 eines ersten modularen Verbraucherabzweiges 2 mit der dritten Steckverbindung 33' eines zweiten modularen Verbraucherabzweiges 2' zusammensteckbar ist. Durch das Zusammenstecken der Steckverbindungen 32, 33' werden je einer der Weiterleitungskontakte 24', 25' des zweiten Verbraucherabzweiges 2' mit dem Zuführkontakt 22 und dem Rückführkontakt 23 des ersten Verbraucherabzweiges 2 verbunden. Das erste Betätigungselement 27 des ersten Verbraucherabzweiges 2 wirkt dabei derart auf das zweite Betätigungselement 28' des zweiten Verbraucherabzweiges 2' ein, dass die Schalteinrichtung 26' des zweiten Verbraucherabzweiges 2' einen Strompfad 29' vom ersten zum zweiten Weiterleitungskontakt 24', 25' des zweiten Verbraucherabzweiges 2' unterbricht.

Im Beispiel der FIG 4 ist erkennbar, dass die Schalteinrichtung 26' des linken Verbraucherabzweiges 2' durch das zweite Betätigungselement 28' geöffnet wird und dass somit ein vom Gruppenabsicherungsmodul 1 eingeprägter Prüfstrom gezwungen ist, zum nächsten Verbraucherabzweig 2 zu fließen. Die Schalteinrichtung 26 des rechten Verbraucherabzweigs 2 ist dagegen geschlossen, da kein weiterer Verbraucherabzweig 2 an diesem angeschlossen ist. Der Prüfstrom kann daher über die geschlossene Schalteinrichtung 26 zum Gruppenabsicherungsmodul 1 zurückfließen.

Vorzugsweise sind die Steckverbindungen 32, 33' der Verbraucherabzweige 2, 2' derart angeordnet, dass die zweite Steckverbindung 32 des ersten Verbraucherabzweiges 2 und die dritte Steckverbindung 33' des zweiten Verbraucherabzweiges 2' beim Ansetzen des ersten Verbraucherabzweiges 2 an den zweiten Verbraucherabzweig 2' automatisch zusammengesteckt werden.

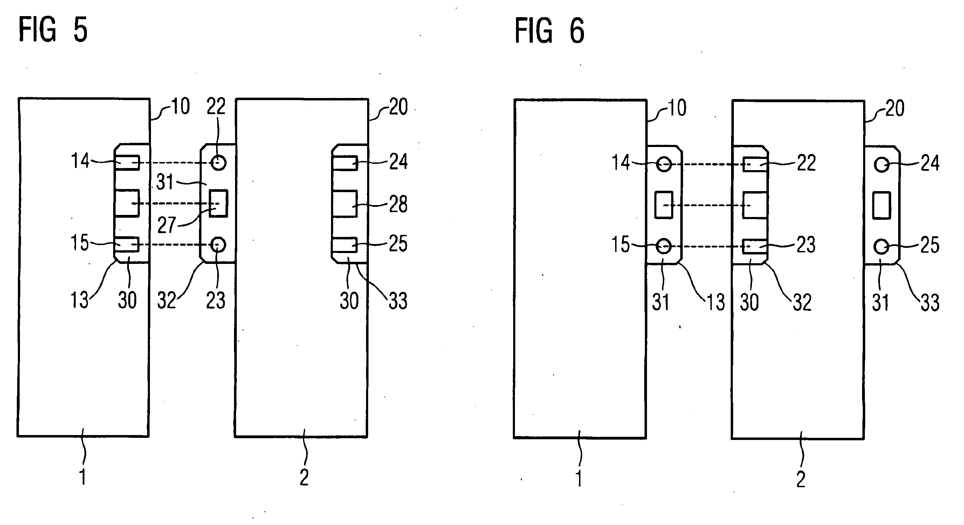

FIG 5 zeigt eine Ausführungsform von Steckverbindungen 13, 32, 33 zur Verbindung des Gruppenabsicherungsmoduls 1 mit beispielhaft nur einem Verbraucherabzweig 2. Es ist die Schalteinrichtung 26 als mechanische Schalteinrichtung ausgebildet. Die Betätigungselemente 27, 28 sind als mechanische Betätigungselemente ausgebildet. Die Schalteinrichtung kann alternativ als elektronische Schalteinrichtung ausgebildet sein. Die Betätigungselemente können alternativ als elektrisch zusammenwirkende Kontakte ausgebildet sein.

Im Beispiel der FIG 5 ist die erste Steckverbindung 13 eine Buchse, welche als Einbuchtung 30 im Gehäuse 10 des Gruppenabsicherungsmoduls 1 ausgebildet ist. Die beiden Schleifenkontakte 14, 15 sind als flächige Kontakte ausgeführt, die einen entsprechenden Zuführ- und Rückführkontakt 22, 23 beim Einstecken eines zur Buchse 13 korrespondierenden Steckers 32 eines Verbraucherabzweig 2 kontaktieren. Der Stecker 32 ist als Vorsprung 31 an einer Außenseite des Verbraucherabzweiges 2 ausgebildet. Vorzugsweise ist das erste Betätigungselement 27 als seitliche Nase am Stecker 32 ausgebildet, welche beim Einstecken des Steckers 32 in die Buchse 33 eines weiteren nicht gezeigten Verbraucherabzweiges ein bewegliches Gegenstück 28 auslenkt. Dieses Gegenstück 28 wirkt auf einen beweglichen Kontakt der Schalteinrichtung 26 ein, so dass diese öffnet.

Zusätzlich kann auch das Gruppenabsicherungsmodul 1 eine Schalteinrichtung aufweisen, welche zwischen den beiden Schleifenkontakten 14, 15 geschaltet ist. Diese kann mit einem weiteren zweiten Betätigungselement derart zusammenwirken, dass die Schalteinrichtung bei Anstecken eines Verbraucherabzweiges 2 automatisch geöffnet wird.

FIG 6 zeigt eine weitere Ausführungsform von Steckverbindungen 11, 32, 33 zur Verbindung des Gruppenabsicherungsmoduls 1 mit beispielhaft nur einem Verbraucherabzweig 2. In diesem Fall erfolgt die Ausgestaltungen der Steckverbindungen 13, 32, 33 in umgekehrter Weise, das heißt die erste und dritte Steckverbindung 13, 33 als Stecker und die zweite Steckverbindung 32 als Buchse.

## Patentansprüche

1. Gruppenabsicherungsmodul für eine Schaltgeräteanordnung (100) zur Absicherung einer Gruppe von Verbraucherabzweigen (2) mit jeweils einem Schütz (6) zum Ein- oder Ausschalten eines jeweiligen Verbrauchers (3), wobei das Gruppenabsicherungsmodul einen Leistungsschalter (4) zur Verwirklichung eines Kurzschlussschutzes aufweist, wobei der Leistungsschalter (4) mit einem netzseitigen Eingang (11) und mit einem verbraucherseitigen Ausgang (12) des Gruppenabsicherungsmoduls zum Anschließen an ein Stromversorgungsnetz (16) und zum Anschließen der Gruppe von Verbraucherabzweigen (2) verbunden ist, wobei das Gruppenabsicherungsmodul eine Sicherheitsauswerteeinheit (5) aufweist, über welche der Leistungsschalter (4) auslösbar ist, falls eine von den jeweiligen Verbraucherabzweigen (2) erfassbare Rückmeldung angibt, dass einer der Schütze (6) der Verbraucherabzweige (2) nicht mehr abschaltbar ist, **dadurch gekennzeichnet,**
- **dass** das Gruppenabsicherungsmodul als Baueinheit ausgebildet ist sowie einen ersten und zweiten mit der Sicherheitsauswerteeinheit (5) verbundenen Schleifenkontakt (14, 15) aufweist,
- **dass** die beiden Schleifenkontakte (14, 15) Bestandteile einer vorkonfektionierten ersten Steckverbindung (13) sind,
- **dass** die erste Steckverbindung (13) von außerhalb des Gehäuses (10) zugänglich ist und derart ausgebildet ist, dass eine zweite Steckverbindung (32) eines Verbraucherabzweiges (2) mit der ersten Steckverbindung (13) des Gruppenabsicherungsmoduls zum Aufbau einer automatischen Rückmeldeschleife (50) zusammensteckbar ist, und
- **dass** die Sicherheitsauswerteeinheit (5) auslöst, wenn die Rückmeldeschleife (50) unterbrochen ist.

2. Gruppenabsicherungsmodul nach Anspruch 1,
**dadurch gekennzeichnet,**
**dass** das Gruppenabsicherungsmodul ein quaderförmiges, zur aneinanderreihbaren Montage an einer Hutschiene ausgebildetes Gehäuse (10) aufweist.

3. Gruppenabsicherungsmodul nach Anspruch 1 oder 2,
**dadurch gekennzeichnet,**
**dass** die erste und zweite Steckverbindung (13, 32) derart angeordnet sind, dass die zweite Steckverbindung (32) des Verbraucherabzweiges (2) und die erste Steckverbindung (13) des Gruppenabsicherungsmoduls (1) beim Ansetzen des Verbraucherabzweiges (2) an das Gruppenabsicherungsmodul automatisch zusammengesteckt werden.

4. Gruppenabsicherungsmodul nach einem der Ansprüche 1 bis 3,
**dadurch gekennzeichnet,**
**dass** die Sicherheitsauswerteeinheit (5) die Rückmeldeschleife (50) nur nach einer Not- oder Sicherheitsabschaltung auf eine Unterbrechung hin überprüft.

5. Schaltgeräteanordnung mit einer Gruppe von Verbraucherabzweigen (2), insbesondere von Motorstartern, mit jeweils zumindest einem Schütz (6) zum Ein- oder Ausschalten eines jeweiligen Verbrauchers (3), wobei die Schaltgeräteanordnung einen vorgeschalteten Leistungsschalter (4) zur Verwirklichung eines Kurzschlussschutzes aufweist, wobei der Leistungsschalter (4) einen netzseitigen Eingang (11) zum Anschließen an ein Stromversorgungsnetz (10) und einen verbraucherseitigen Ausgang (12) und zum Anschließen der Verbraucherabzweige (2) aufweist, wobei die Schaltgeräteanordnung über eine Sicherheitsauswertfunktion verfügt, durch welche der Leistungsschalter (4) auslösbar ist, falls eine von den jeweiligen Verbraucherabzweigen (2) erfassbare Rückmeldung angibt, dass einer der Schütze (6) der Verbraucherabzweige (2) nicht mehr abschaltbar ist,
**dadurch gekennzeichnet,**
**dass** die Schaltgeräteanordnung ein Gruppenabsicherungsmodul (1) nach einem der vorangegangenen Ansprüche aufweist.

6. Schaltgeräteanordnung nach Anspruch 5,
**dadurch gekennzeichnet,**
**dass** die Gruppe von Verbraucherabzweigen (2) quaderförmig zur modularen aneinanderreihbaren Montage an einer Hutschiene ausgebildet ist.

7. Schaltgeräteanordnung nach Anspruch 5 oder 6,
**dadurch gekennzeichnet,**
- **dass** die Verbraucherabzweige (2) jeweils ein Modulgehäuse (20), einen Schalter (21), einen Zuführkontakt (22), einen Rückführkontakt (23), einen ersten und zweiten Weiterleitungskontakt (24, 25), eine Schalteinrichtung (26) und ein erstes und zweites Betätigungselement (27, 28) aufweisen,
- **dass** der Schalter (21) und die Schalteinrichtung (26) im Modulgehäuse (20) angeordnet sind,
- **dass** der Zuführkontakt (22) und der erste Weiterleitungskontakt (24) über den Schalter (21) und der Rückführkontakt (23) und der zweite Weiterleitungskontakt (25) direkt miteinander verbunden sind,
- **dass** der Zuführkontakt (22), der Rückführkontakt (23) und das erste Betätigungselement (27) Bestandteile einer zweiten vorkonfektionierten Steckverbindung (32) und die Weiterleitungskontakte (24, 25) und das zweite Betätigungselement (28) Bestandteile einer dritten vorkonfektionierten Steckverbindung (33) sind,
- **dass** die Steckverbindungen (32, 33) von außerhalb des Modulgehäuses (20) zugänglich sind und derart ausgebildet sind, dass die zweite Steckverbindung (32) eines ersten modularen Verbraucherabzweiges (2) mit der dritten Steckverbindung (33') eines zweiten modularen Verbraucherabzweiges (2') zusammensteckbar ist, und
- **dass** durch das Zusammenstecken der Steckverbindungen (32, 33') je einer der Weiterleitungskontakte (24', 25') des zweiten Verbraucherabzweiges (2') mit dem Zuführkontakt (22) und dem Rückführkontakt (23) des ersten Verbraucherabzweiges (2) verbunden werden und dass das erste Betätigungselement (27) des ersten Verbraucherabzweiges (2) derart auf das zweite Betätigungselement (28') des zweiten Verbraucherabzweiges (2') einwirkt, dass die Schalteinrichtung (26') des zweiten Verbraucherabzweiges (2') einen Strompfad (29') vom ersten zum zweiten Weiterleitungskontakt (24', 25') des zweiten Verbraucherabzweiges (2') unterbricht.

8. Schaltgeräteanordnung nach Anspruch 7,
**dadurch gekennzeichnet,**
**dass** die Schalteinrichtung (26, 26') als mechanische Schalteinrichtung ausgebildet ist und dass die Betätigungselemente (27, 27', 28, 28') als mechanische Betätigungselemente ausgebildet sind.

9. Schaltgeräteanordnung nach Anspruch 7,
**dadurch gekennzeichnet,**
**dass** die Schalteinrichtung (26, 26') als elektronische Schalteinrichtung ausgebildet ist und dass die Betätigungselemente (27, 27', 28, 28') als elektrisch zusammenwirkende Kontakte ausgebildet sind.

10. Schaltgeräteanordnung nach Anspruch 7, 8 oder 9,
**dadurch gekennzeichnet,**
**dass** die Steckverbindungen (32, 33) derart angeordnet sind, dass die zweite Steckverbindung (32) des ersten Verbraucherabzweiges (2) und die dritte Steckverbindung (33') des zweiten Verbraucherabzweiges (2') beim Ansetzen des ersten Verbraucherabzweiges (2) an den zweiten Verbraucherabzweig (2') automatisch zusammengesteckt werden.

11. Schaltgeräteanordnung nach einem der Ansprüche 5 bis 10,
**dadurch gekennzeichnet,**
**dass** die Schaltgeräteanordnung eine Steuerbaugruppe (7) aufweist, welche einen Anschluss zum Anschließen an ein übergeordnetes Bussystem (71) aufweist und welche über ein internes Bussystem (72) mit einer Steuereinheit des Gruppenabsicherungsmoduls (1) und mit jeweils einer Steuereinheit der angeschlossenen Verbraucherabzweige (2) datentechnisch verbunden ist.

## Claims

1. Group protection module for a switchgear arrangement (100) for protecting a group of load feeders (2), each having a contactor (6) for connecting or disconnecting a respective load (3), said group protection module having a circuit breaker (4) for implementing short-circuit protection, said circuit breaker (4) being connected to a supply-side input (11) and a load-side output (12) of the group protection module for connection to a power supply system (16) and for connecting the group of load feeders (2), wherein the group protection module has a safety evaluation unit (5) via which the circuit breaker (4) can be tripped if a status signal detectable by the respective load feeders (2) indicates that one of the contactors (6) of the load feeders (2) can no longer be de-energised,
**characterised in that**
- the group protection module is implemented as a constructional unit and has a first and second loop contact (14, 15) connected to the safety evaluation unit (5),
- the two loop contacts (14, 15) are component parts of a prefabricated first connector (13),
- the first connector (13) is accessible from outside the housing (10) and is implemented such that a second connector (32) of a load feeder (2) is intermateable with the first connector (13) of the group protection module to establish an automatic status signalling loop (50), and
- the safety evaluation unit (5) trips if the status signalling loop (50) is interrupted.

2. Group protection module according to claim 1,
**characterised in that**
the group protection module has a block-shaped housing (10) for buttable mounting to a DIN rail.

3. Group protection module according to claim 1 or 2,
**characterised in that**
the first and second connector (13, 32) are disposed such that the second connector (32) of the load feeder (2) and the first connector (13) of the group protection module (1) are automatically intermated when the load feeder (2) is attached to the group protection module.

4. Group protection module according to one of claims 1 to 3,
**characterised in that**
the safety evaluation unit (5) checks the status signalling loop (50) for an interruption only after an emergency or safety disconnection.

5. Switchgear arrangement with a group of load feeders (2), in particular motor starters, each having at least one contactor (6) for connecting or disconnecting a respective load (3), the switchgear arrangement being preceded by a circuit breaker (4) for providing short-circuit protection, said circuit breaker (4) having a supply-side input (11) for connecting to a power supply system (10) and a load-side output (12) for connecting the load feeders (2), wherein the switchgear arrangement has a safety evaluation function by means of which the circuit breaker (4) can be tripped if a status signal detectable by the respective load feeders (2) indicates that one of the contactors (6) of the load feeders (2) can no longer be de-energised,
**characterised in that**
the switchgear arrangement has a group protection module (1) according to one of the preceding claims.

6. Switchgear arrangement according to claim 5,
**characterised in that**
the group of load feeders (2) is block-shaped for modular, buttable mounting to a DIN rail.

7. Switchgear arrangement according to claim 5 or 6,
**characterised in that**
- the load feeders (2) each have a module housing (20), a switch (21), a feed contact (22), a return contact (23), a first and second forwarding contact (24, 25), a switching device (26) and a first and second actuating element (27, 28),
- the switch (21) and the switching device (26) are disposed in the module housing (20),
- the feed contact (22) and the first forwarding contact (24) are interconnected via the switch (21), and the return contact (23) and the second forwarding contact (25) are interconnected directly,
- the feed contact (22), the return contact (23) and the first actuating element (27) are component parts of a second prefabricated connector (32), and the forwarding contacts (24, 25) and the second actuating element (28) are component parts of a third prefabricated connector (33),
- the connectors (32, 33) are accessible from outside the module housing (20) and are implemented such that the second connector (32) of a first modular load feeder (2) is intermateable with the third connector (33') of a second modular load feeder (2'), and
- intermating of the connectors (32, 33') causes one of the forwarding contacts (24', 25') of the second load feeder (2') to be connected to the feed contact (22) and the return contact (23) of the first load feeder (2), and the first actuating element (27) of the first load feeder (2) acts on the second actuating element (28') of the second load feeder (2') such that the switching device (26') of the second load feeder (2') interrupts a current path (29') from the first to the second forwarding contact (24', 25') of the second load feeder (2').

8. Switchgear arrangement according to claim 7,
**characterised in that**
the switching device (26, 26') is implemented as a mechanical switching device and that the actuating elements (27, 27', 28, 28') are implemented as mechanical actuating elements.

9. Switchgear arrangement according to claim 7,
**characterised in that**
the switching device (26, 26') is implemented as an electronic switching device and that the actuating elements (27, 27', 28, 28') are implemented as electrically interacting contacts.

10. Switchgear arrangement according to one of claims 7, 8 or 9,
**characterised in that**
the connectors (32, 33) are disposed such that the second connector (32) of the first load feeder (2) and the third connector (33') of the second load feeder (2') are automatically intermated when the first load feeder (2) is attached to the second load feeder (2').

11. Switchgear arrangement according to one of claims 5 to 10,
**characterised in that**
the switchgear arrangement has a control module (7) which has a terminal for connecting to a higher-order bus system (71) and which is communicatively connected via an internal bus system (72) to a control unit of the group protection module (1) and to a control unit of each of the connected load feeders (2).

## Revendications

1. Module de protection de groupe pour une installation d'appareils de commutation (100) destiné à protéger un groupe de dérivations d'utilisateur (2) comprenant chacune un contacteur (6) pour la connexion ou la déconnexion d'un utilisateur (3) concerné, le module de protection de groupe présentant un interrupteur de puissance (4) pour réaliser une protection contre les courts-circuits, l'interrupteur de puissance (4) étant relié à une entrée (11) côté réseau et à une sortie (12) côté utilisateur du module de protection de groupe pour le raccordement à un réseau d'alimentation en courant (16) et pour le raccordement du groupe de dérivations d'utilisateur (2), le module de protection de groupe présentant une unité d'analyse de sécurité (5), par laquelle l'interrupteur de puissance (4) peut être déclenché dans le cas où une information de retour pouvant être enregistrée par les dérivations d'utilisateur (2) respectives indique que l'un des contacteurs (6) des dérivations d'utilisateur (2) ne peut plus être déconnecté, **caractérisé en ce que**
- le module de protection de groupe est conçu comme module qui présente un premier et un second contacts en boucle (14, 15) reliés à l'unité d'analyse de sécurité (5),
- **en ce que** les deux contacts en boucle (14, 15) sont des composants d'une première connexion à fiche (13) préconfectionnée,
- **en ce que** la première connexion à fiche (13) est accessible par l'extérieur du bâtiment (10) et conçue de telle sorte qu'une seconde connexion à fiche (32) d'une dérivation d'utilisateur (2) peut être emboîtée conjointement avec la première connexion à fiche (13) du module de protection de groupe pour l'établissement d'une boucle d'information de retour (50) automatique, et
- **en ce que** l'unité d'analyse de sécurité (5) se déclenche lorsque la boucle d'information de retour (50) est interrompue.

2. Module de protection de groupe selon la revendication 1,
**caractérisé en ce que,**
le module de protection de groupe présente un boîtier (10) en forme de parallélépipède, conçu pour le montage alignable sur un profilé chapeau.

3. Module de protection de groupe selon la revendication 1 ou 2,
**caractérisé en ce que**
la première et la seconde connexions à fiche (13, 32) sont disposées de telle sorte que la seconde connexion à fiche (32) de la dérivation d'utilisateur (2) et la première connexion à fiche (13) du module de protection de groupe (1) sont emboîtées ensemble automatiquement lors de l'application de la dérivation d'utilisateur (2) sur le module de protection de groupe.

4. Module de protection de groupe selon l'une quelconque des revendications 1 à 3,
**caractérisé en ce que**
l'unité d'analyse de sécurité (5) contrôle la boucle d'information de retour (50) uniquement après une déconnexion d'urgence ou de sécurité au niveau d'une interruption.

5. Agencement d'appareils de commutation comprenant un groupe de dérivations d'utilisateur (2), en particulier de starters de moteur, comprenant chacune au moins un contacteur (6) pour la connexion ou la déconnexion d'un utilisateur (3) respectif, l'agencement d'appareils de commutation présentant un interrupteur de puissance (4) placé en amont pour la réalisation d'une protection contre les courts-circuits, l'interrupteur de puissance (4) présentant une entrée (11) côté réseau pour le raccordement à un réseau d'alimentation électrique (10) et une sortie (12) côté utilisateur, et pour le raccordement des dérivations d'utilisateur (2), l'agencement d'appareils de commutation disposant d'une fonction d'analyse de sécurité, par laquelle l'interrupteur de puissance (4) peut se déclencher dans le cas où une information de retour pouvant être enregistrée par les dérivations d'utilisateur (2) respectives indique que l'un des contacteurs (6) des dérivations d'utilisateur (2) ne peut plus être déconnecté, **caractérisé en ce que**
- l'agencement d'appareils de commutation présente un module de protection de groupe (1) selon l'une quelconque des revendications précédentes.

6. Agencement d'appareils de commutation selon la revendication 5,
**caractérisé en ce que**
le groupe de dérivations d'utilisateur (2) est conçu en forme de parallélépipède pour un montage modulaire et alignable sur un profilé chapeau.

7. Agencement d'appareils de commutation selon la revendication 5 ou 6,
**caractérisé en ce que**
- les dérivations d'utilisateur (2) présentent chacune un boîtier de module (20), un interrupteur (21), un contact d'arrivée (22), un contact de retour (23), un premier et un second contacts de transmission (24, 25), un dispositif de commutation (26) et un premier et un second éléments d'actionnement (27, 28),
- **en ce que** l'interrupteur (21) et le dispositif de commutation (26) sont disposés dans le boîtier de module (20),
- **en ce que** le contact d'arrivée (22) et le premier contact de transmission (24) sont reliés l'un à l'autre par un interrupteur (21) et le contact de retour (23) et le second contact de transmission (25) sont reliés directement l'un à l'autre,
- **en ce que** le contact d'arrivée (22), le contact de retour (23) et le premier élément d'actionnement (27) sont des composants d'une seconde connexion à fiche (32) préconfectionnée et les contacts de transmission (24, 25) et le second élément d'actionnement (28) sont des composants d'une troisième connexion à fiche (33) préconfectionnée,
- **en ce que** les connexions à fiche (32, 33) sont accessibles par l'extérieur du boîtier de module (20) et sont conçues de telle sorte que la seconde connexion à fiche (32) d'une première dérivation d'utilisateur (2) modulaire peut être connectée conjointement avec la troisième connexion à fiche (33') d'une seconde dérivation d'utilisateur (2') modulaire, et
- **en ce que**, par la connexion conjointe des connexions à fiche (32, 33'), à chaque fois l'un des contacts de transmission (24', 25') de la seconde dérivation d'utilisateur (2') est relié au contact d'arrivée (22) et au contact de retour (23) de la première dérivation d'utilisateur (2) et **en ce que** le premier élément d'actionnement (27) de la première dérivation d'utilisateur (2) agit sur le second élément d'actionnement (28') de la seconde dérivation d'utilisateur (2') de telle sorte que le dispositif de commutation (26') de la seconde dérivation d'utilisateur (2') interrompe un chemin de courant (29') allant du premier contact au second contact de transmission (24', 25') de la seconde dérivation d'utilisateur (2').

8. Agencement d'appareils de commutation selon la revendication 7,
**caractérisé en ce que,**
le dispositif de commutation (26, 26') est conçu comme dispositif de commutation mécanique et **en ce que** les éléments d'actionnement (27, 27', 28, 28') sont conçus comme des éléments d'actionnement mécaniques.

9. Agencement d'appareils de commutation selon la revendication 7,
**caractérisé en ce que**
le dispositif de commutation (26, 26') est conçu comme un dispositif de commutation électronique et **en ce que** les éléments d'actionnement (27, 27', 28, 28') sont conçus comme des contacts coopérant de façon électrique.

10. Agencement d'appareils de commutation selon la revendication 7, 8 ou 9,
**caractérisé en ce que**
les connexions à fiche (32, 33) sont disposées de telle sorte que la seconde connexion à fiche (32) de la première dérivation d'utilisateur (2) et la troisième connexion à fiche (33') de la seconde dérivation d'utilisateur (2') sont emboîtées ensemble automatiquement lors de l'application de la première dérivation d'utilisateur (2) sur la seconde dérivation d'utilisateur (2').

11. Agencement d'appareils de commutation selon l'une quelconque des revendications 5 à 10, **caractérisé en ce que** l'agencement d'appareils de commutation présente un groupe de commande (7) qui présente un branchement pour le raccordement à un système de bus (71) prioritaire et qui est relié au niveau de l'informatique par un système de bus (72) interne à une unité de commande du module de protection de groupe (1) et à respectivement une unité de commande des dérivations d'utilisateur (2) raccordées.
